# EUROPÄISCHE PATENTSCHRIFT

(11) **EP 0 978 112 B1**
(45) Veröffentlichungstag und Bekanntmachung des Hinweises auf die Patenterteilung: **18.09.2002**
(21) Anmeldenummer: 99911691.6
(22) Anmeldetag: 19.02.1999
(51) Int. Cl.: G09F 3/02

(54) **MEHRLAGIGES ETIKETT**
MULTILAYER LABEL
ETIQUETTE MULTICOUCHE

(30) Priorität: 20.02.1998 DE 19807232
(43) Veröffentlichungstag der Anmeldung: 09.02.2000
(73) Patentinhaber: Schreiner Etiketten Und Selbstklebetechnik GmbH & Co. KG, 85764 Oberschleissheim (DE)
(72) Erfinder: SEIDL, Peter, D-81371 München (DE)
(74) Vertreter: Kehl, Günther, Dipl.-Phys.
(86) Internationale Anmeldenummer: EP9901103
(87) Internationale Veröffentlichungsnummer: WO99042980

(56) Entgegenhaltungen:
- EP-A- 0 755 776
- WO-A-95/29475
- DE-A- 2 051 845
- DE-A- 2 613 131

## Beschreibung

Die vorliegende Erfindung betrifft ein Verfahren zum Herstellen eines mehrlagigen Etiketts.

Die vorliegende Erfindung betrifft auch ein mehrlagiges Etikett, das nach dem erfindungsgemäßen Verfahren hergestellt ist.

Ein mehrlagiges Etikett ist zum Beispiel in DE 2 051 845 beschrieben. Offenbart ist ein fälschungssicheres Schild. Das bekannte Etikett ist mehrlagig und soll anzeigen, ob versucht wurde, es abzulösen. Hierzu ist vorgesehen, daß ein Schriftzug auf eine Maske aufgedruckt ist. Die Maske wird unterseitig mittels einer Klebeschicht an einem bestimmungsgemäßen Gegenstand angebracht. Auf der Maske klebt eine transparente Folie. Wird nun versucht, das Etikett vom bestimmungsgemäßen Gegenstand zu lösen, so wird ein Teil der Maske mit dem darauf befindlichen Schriftzug mit der Folie abgelöst, während ein anderer Teil der Maske auf dem bestimmungsgemäßen Gegenstand verbleibt. Dies wird erreicht durch unterschiedlich stark haftende Klebstoffe zwischen Folie und Maske beziehungsweise Maske und dem bestimmungsgemäßen Gegenstand.

Bei mehrlagigen Etiketten besteht schon seit jeher das Problem, daß im Rahmen der Herstellung derartiger mehrlagiger Etiketten im Prinzip jederzeit überwacht werden muß, ob tatsächlich alle Lagen dieses mehrlagigen Etiketts vorhanden sind. In diesem Zusammenhang genügt es erfahrungsgemäß nicht nur, das Vorhandensein der einzelnen Lagen des mehrlagigen Etiketts zu kontrollieren, sondern es kann unter Umständen auch erforderlich sein, darauf abzustellen, ob jede Lage an der richtigen Stelle am und im mehrlagigen Etikett vorgesehen ist.

Da die einzelnen Lagen eines mehrlagigen Etiketts während des Produktionsprozesses mit oftmals nicht geringem räumlichem und/oder zeitlichem Abstand aufgebracht werden, ist mit einer derartigen Überwachung unweigerlich ein hoher logistischer und organisatorischer Aufwand verbunden.

Auf der anderen Seite handelt es sich bei mehrlagigen Etiketten, gerade wenn sie beispielsweise auf dem pharmazeutischen Gebiet Verwendung finden, um technisch anspruchsvolle, nicht unkomplizierte Produkte, bei denen jede einzelne Lage zumeist eine spezielle Aufgabe und Funktion hat. Nicht nur ein Fehlen, sondern auch eine Verschiebung oder Verwerfung einer Lage kann hierbei zu einer Fehlfunktion und mithin zur Unbrauchbarkeit des gesamten mehrlagigen Etiketts führen.

Eine derartige Fehlfunktion und mithin Unbrauchbarkeit zeitigt nicht nur dahingehend gravierende Konsequenzen, daß die dann zumeist in sehr großer Stückzahl fehlerhaft bzw. mangelhaft hergestellten mehrlagigen Etiketten als Ausschuß nicht mehr verkäuflich sind, was herstellerseitig zu unerwünschten Verlusten an Arbeitskraft und Material führt und hohe Kosten verursacht, sondern birgt auch insofern eine gewisse Gefahr in sich, als derartige fehlerhaft bzw. mangelhaft hergestellte mehrlagige Etiketten, sofern der Fehler bzw. Mangel auf seiten des Herstellers unbemerkt bleibt, beim praktischen Einsatz versagen können, was nicht nur in jedem Falle unerfreulich, sondern unter gewissen Umständen sogar riskant sein kann.

Die vorstehend dargelegten Nachteile und Unzulänglichkeiten konnten durch die aus dem Stand der Technik bekannten mehrlagigen Etiketten nicht beseitigt werden.

Demzufolge liegt der vorliegenden Erfindung die Aufgabe zugrunde, ein Verfahren zum Herstellen eines mehrlagigen Etiketts bereitzustellen, bei dem auf technisch einfache und doch zuverlässige Art feststellbar ist, ob sämtliche Lagen in ordnungsgemäßer Weise vorhanden sind.

Des weiteren zielt die vorliegende Erfindung darauf ab, daß bei dem mehrlagigen Etikett die Überprüfung der vollständigen Anordnung der einzelnen Lagen in maschineller, das heißt automatisierter Weise erfolgen kann.

Schließlich soll das Etikett schnell und preiswert herstellbar sein, wobei nach Möglichkeit weitestgehend auf bereits vorhandene Produktionsanlagen zurückgegriffen werden soll.

Erfindungsgemäß werden diese Aufgaben durch ein Verfahren zum Herstellen eines mehrlagigen Etiketts gelöst, wie es in Patentanspruch 1 angegeben ist.

Indem beim mehrlagigen Etikett gemäß der vorliegenden Erfindung mindestens ein Sicherheitsmerkmal vorgesehen wird, das sich aus mindestens zwei auf verschiedenen Lagen des Etiketts angeordneten Teilen zusammensetzt, kann auf technisch überraschend einfache und doch zuverlässige Art festgestellt werden, ob sämtliche Lagen des Etiketts vorhanden sind, und zwar unabhängig davon, ob das Etikett zwei Lagen oder mehr als zwei Lagen aufweist. Hierbei bietet sich beispielsweise ein Abtasten und Überprüfen des Sicherheitsmerkmals auf Vollständigkeit und auch auf ordnungsgemäße Anordnung bzw. ordnungsgemäße Zusammensetzung mit einem geeigneten optischen Verfahren an.

Der Fachmann wird in diesem Zusammenhang besonders zu schätzen wissen, daß bei dem vorliegenden Verfahren auch eine Untermischung oder Verwechslung verschiedener Etikettensorten mit hoher Zuverlässigkeit ausgeschlossen werden kann, denn jede Etikettensorte wird erfahrungsgemäß mit einem anderen Sicherheitsmerkmal ausgestattet. Hierdurch kann ausgeschlossen werden, daß eine Lage des mehrlagigen Etiketts aus einer anderen Charge als eine andere Lage des mehrlagigen Etiketts ist.

Im Hinblick auf die erfindungswesentlichen Merkmale, die in Form eines sich aus mindestens zwei auf verschiedenen Lagen des Etiketts angeordneten Teilen zusammensetzbaren Sicherheitsmerkmals implementiert sind, kann die Überprüfung der vollständigen Anordnung der einzelnen Lagen in maschineller, das heißt automatisierter Weise erfolgen, sei es bereits während des Produktionsprozesses oder in besonders bevorzugter Weise im Rahmen der abschließenden Endkontrolle.

Gemäß einer besonders erfinderischen Weiterbildung des vorliegenden Verfahrens handelt es sich bei dem Sicherheitsmerkmal um mindestens einen Barcode. Derartige Barcodes setzen sich im Regelfall aus einer Reihe unterschiedlich dicker und verschiedenartig zueinander beabstandeter Striche zusammen und ermöglichen auf diese Weise eine Speicherung spezifischer Informationen, die im vorliegenden Fall auf das Etikett selbst und/oder auf den zu etikettierenden Gegenstand bezogen sein können.

Stattet man nun das mehrlagige Etikett gemäß der vorliegenden Erfindung mit einem Barcode als Sicherheitsmerkmal aus, so bietet es sich an, daß sich der Barcode aus mindestens zwei auf verschiedenen Lagen des Etiketts angeordneten Teilen zusammensetzt.

Hierbei ist es zweckmäßig, einen Teil der Striche des Barcodes beispielsweise auf der unteren Lage des Etiketts und den anderen Teil der Striche auf der oberen Lage des Etiketts vorzusehen. Durch diese technische Maßnahme kann der Barcode in seiner Gesamtheit nur bei ordnungsgemäßer Zusammensetzung der verschiedenen Lagen des Etiketts beispielsweise mittels eines Laserstrahls erfaßt werden, wodurch gewährleistet ist, daß beide Lagen des Etiketts vorhanden sind.

In bevorzugter Weise ist auch eine Ausführungsform vorgesehen, bei der die Striche des Barcodes abwechselnd auf einer unteren Lage des Etiketts und auf einer oberen Lage des Etiketts vorgesehen wurden. Auch diese Variante erlaubt eine Überprüfung der Anordnung der beiden Lagen des Etiketts in einer ausgesprochen präzisen und zuverlässigen Weise.

Will man die beiden vorbeschriebenen Ausgestaltungsformen für die Implementierung eines Barcodes als Sicherheitsmerkmal in abstrahierter Weise erfassen, ist gemäß der vorliegenden Erfindung eine Ausführung bevorzugt, bei der der Barcode m Striche aufweist, von denen n Striche auf einer Lage des Etiketts und m-n Striche auf einer anderen Lage des Etiketts angeordnet sind. Hierbei gilt für die ganzen positiven Zahlen m, n die Relation, daß m größer als n ist.

Im Hinblick auf den Einsatz mindestens eines Barcodes als Sicherheitsmerkmal wird auch als erfindungswesentliche Eigenschaft des vorliegenden Verfahrens angesehen, daß im Rahmen der Herstellung von Etiketten nach den während der einzelnen Produktionsstufen vorgesehenen Überprüfungen eine letzte, abschließende Endkontrolle der fertiggestellten Etiketten erfolgen muß. Diese Endkontrolle wird im Regelfall mittels eines Code-Lesers durchgeführt, durch den nicht nur feststellbar ist, ob alle Etiketten vorhanden sind, sondern auch, ob jedes Etikett alle vorgesehenen Lagen umfaßt.

Ergänzend wird der Fachmann in diesem Zusammenhang zu schätzen wissen, daß durch das Anordnen mindestens eines Barcodes als Sicherheitsmerkmal auch eine Überprüfung der Etiketten im Hinblick auf die korrekte Chargenzugehörigkeit in die Endkontrolle mittels des Code-Lesers integriert sein kann; eine in der Praxis besonders ärgerliche und schädliche Durchmischung verschiedener Chargen bzw. einzelner Lagen aus unterschiedlichen Chargen kann demzufolge auf überzeugende Weise ausgeschlossen werden.

Im Ergebnis wird durch die Anordnung mindestens eines Barcodes als Sicherheitsmerkmal die durch einen Code-Leser bewerkstelligte Endkontrolle i n synergetischer Weise in den Prozeß der Herstellung und Überprüfung der Etiketten miteinbezogen, wodurch produktionstechnischer Aufwand und unnötige Kosten eingespart werden.

Die vorstehend gewählte Formulierung "mehrlagiges Etikett" impliziert, daß das mehrlagige Etikett zwei Lagen oder mehr als zwei Lagen aufweist. In diesem Zusammenhang sei als erfindungswesentliches Merkmal hervorgehoben, daß sich das mindestens eine Sicherheitsmerkmal gemäß dem Patentanspruch 1 der vorliegenden Erfindung auch auf mehr als zwei Lagen verteilen kann, sofern das mehrlagige Etikett nicht nur eine untere Lage und eine obere Lage aufweist. In diesem Sinne ist auch eine Zusammensetzung des Sicherheitsmerkmals aus drei oder mehr Teilen denkbar, welche Teile sich auf verschiedenen Lagen des Etiketts befinden.

Unabhängig von der Anzahl der vorgesehenen Lagen ist eine Verfahrensvariante als vorteilhaft zu betrachten, bei der die untere Lage einen größeren Flächeninhalt als die mindestens eine darüber angeordnete Lage aufweist. In diesem Falle kann ein Teil des Sicherheitsmerkmals auf dem "überstehenden" Bereich der unteren Lage angeordnet werden und durch den mindestens einen anderen Teil des Sicherheitsmerkmals ergänzt werden, der auf einer oder auf mehreren über der unteren Lage angeordneten Lagen vorgesehen ist, so daß sich das Sicherheitsmerkmal in seiner Gesamtheit aus den einzelnen Teilen zusammenfügt. Entscheidend ist, daß die untere Lage nicht vollständig von der über ihr angeordneten oberen Lage überdeckt wird, sondern daß der Teil der unteren Lage frei bleibt, auf dem das Sicherheitsmerkmal angeordnet ist.

Die gleiche Wirkung wird erreicht, wenn gemäß einer vorteilhaften Ausführungsform der vorliegenden Erfindung mindestens eine der Lagen transparent ausgeführt wird.

Diese Ausgestaltung ist insbesondere dann heranzuziehen, wenn die auf den unteren Lagen vorgesehenen Teile des Sicherheitsmerkmals im Zusammenspiel mit dem auf der oberen Lage vorgesehenen Teil des Sicherheitsmerkmals zusammengesetzt werden, wobei es in nicht seltenen Fällen zweckmäßig ist, gerade die obere Lage transparent auszubilden.

In bevorzugter Weise wird mindestens eine der Lagen auf ihrer Oberseite und/oder auf ihrer Unterseite zumindest abschnittsweise und/oder zumindest stellenweise mit Klebstoff versehen. Durch diesen Klebstoff kann zum einen eine Verbindung zwischen den einzelnen Lagen des mehrlagigen Etiketts hergestellt werden, das heißt mindestens zwei Lagen des Etiketts können durch Klebstoff miteinander verbunden sein; zum anderen kann der Klebstoff auch dazu dienen, das Etikett an einem Gegenstand anzubringen. Zu letzterem Zwecke erweist es sich als vorteilhaft, wenn die untere Lage auf ihrer Unterseite zumindest abschnittsweise und/oder zumindest stellenweise mit Klebstoff versehen ist.

Um ein maschinelles Verspenden der mehrlagigen Etiketten gemäß der vorliegenden Erfindung zu ermöglichen, wird der Klebstoff, der auf der Unterseite der unteren Lage zumindest abschnittsweise und/oder zumindest stellenweise vorgesehen sein kann, mit einem klebstoffabweisenden Trägermaterial bedeckt. Hierbei befindet sich das Etikett in geeigneter Weise in einer Reihe mit weiteren Etiketten auf dem Trägermaterial. Dieses Trägermaterial ist hierbei so ausgebildet, daß ein vollautomatisches Verspenden des Etiketts vor dem Anbringen am Gegenstand ohne großen Aufwand möglich ist. Hierzu kann das Trägermaterial als Unterlage mit einem Kraftpapier versehen werden, auf dem über einen Polyethylen(PE)-Film eine Silikonschicht haftet.

Wie vorstehend bereits dargelegt, stellt das mindestens eine Sicherheitsmerkmal, das auch als Sicherheitselement bezeichnet werden kann, ein effektives und zuverlässiges Hilfsmiftel zur Feststellung des Vorhandenseins aller Lagen des mehrlagigen Etiketts dar. Hierbei kann die Anordnung des Sicherheitsmerkmals im Rahmen der vorliegenden Erfindung in vorteilhafter Weise bewerkstelligt werden, indem das Sicherheitsmerkmal aufgedruckt wird. Alternativ hierzu bestehen auch die bevorzugten Varianten, das Sicherheitsmerkmal aufzuprägen oder aufzustanzen.

Die erfindungswesentlichen Eigenschaften des vorliegenden mehrlagigen Etiketts sind im wesentlichen von der Frage des verwendeten Materials unabhängig. Dennoch hat es sich in der Praxis als vorteilhaft erwiesen, wenn mindestens eine der Lagen aus Kunststoff besteht, wobei es sich bei dem Kunststoff vorteilhafterweise um mindestens eines der nachfolgend genannten Materialien handelt: Acrylat, Polyester, Polyethylen (PE), Polyethylenterephthalat (PET), Polypropylen (PP), Polyvinylchlorid (PVC).

Üblicherweise werden Etiketten herstellerseitig und/oder anwenderseitig mit Informationen versehen. Demzufolge wird das mehrlagige Etikett gemäß der vorliegenden Erfindung in vorteilhafter Weise mit mindestens einem Aufdruck bzw. mindestens einer Beschriftung versehen. Hierbei kann dieser Aufdruck bzw. diese Beschriftung auf der Oberseite der obersten Lage vorgesehen werden; wenn eine oder mehrere der verwendeten Lagen transparent sind, so bietet sich auch auf oder unter den Zwischenlagen die Anbringung eines Aufdrucks bzw. einer Beschriftung an.

Gemäß einer bevorzugten Verfahrensvariante wird für das mehrlagige Etikett mindestens eine Prägung und/oder mindestens eine Stanzung vorgesehen, wobei es sich bei letzterer um eine Sicherheitsstanzung handeln kann, durch die das Etikett segmentiert wird.

Unabhängig hiervon oder in Kombination hiermit kann das mehrlagige Etikett, vorzugsweise die obere Lage desselben, mit einer auf ihrer Unterseite klebstofffreien Anfaßlasche versehen werden, um ein problemloses und schnelles Abziehen einer oder mehrerer Lagen des Etiketts zu ermöglichen.

Weitere Ausgestaltungen, Merkmale und Vorteile der vorliegenden Erfindung werden nachstehend anhand der in den Figuren 1 bis 4 exemplarisch veranschaulichten Ausführungsbeispiele näher erläutert.

Es zeigt:
- Figur 1:: eine Aufsicht auf ein erstes Ausführungsbeispiel eines mehrlagigen Etiketts das gemäß der vorliegenden Erfindung hergestellt ist;
- Figur 2A:: eine seitliche Schnittansicht des ersten Ausführungsbeispiels aus Figur 1 in einer ersten Variante;
- Figur 2B:: eine seitliche Schnittansicht des ersten Ausführungsbeispiels aus Figur 1 in einer zweiten Variante;
- Figur 3:: eine Aufsicht auf ein zweites Ausführungsbeispiel eines mehrlagigen Etiketts gemäß der vorliegenden Erfindung; und
- Figur 4:: eine seitliche Schnittansicht des zweiten Ausführungsbeispiels aus Figur 3.

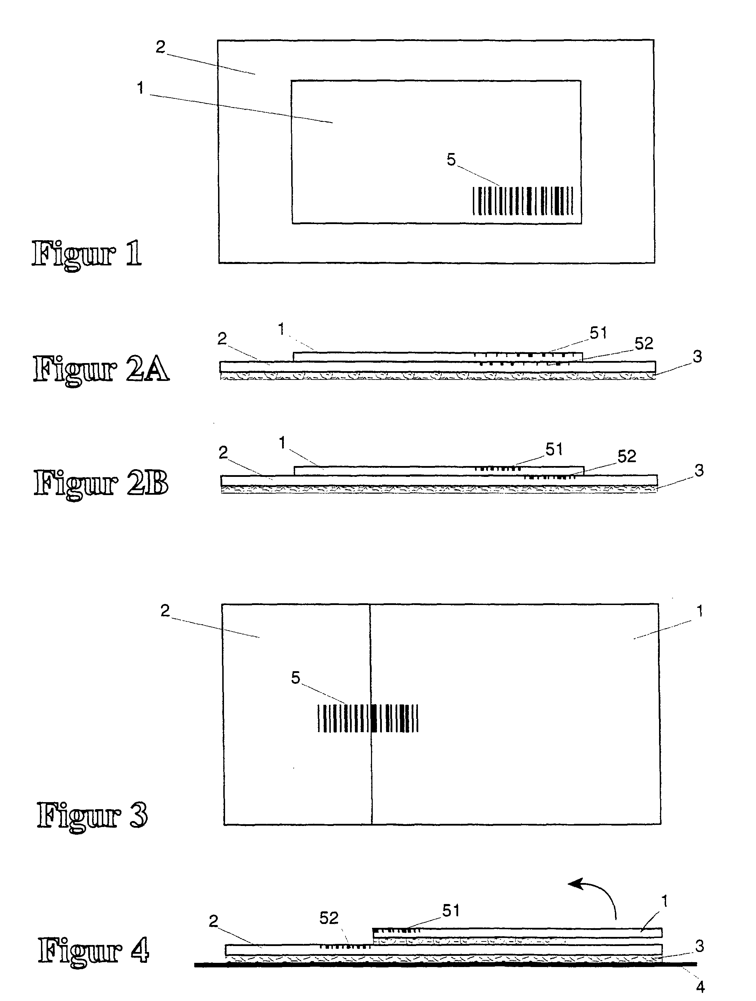

Identische Bezugszeichen in den Figuren 1 bis 4 bezeichnen gleiche oder ähnliche Teile bzw. Merkmale.

Figur 1 zeigt eine Aufsicht auf ein erstes Ausführungsbeispiel eines mehrlagigen Etiketts das gemäß dem Verfahren der vorliegenden Erfindung hergestellt ist.

Das in Figur 1 dargestellte mehrlagige Etikett weist eine untere Lage 2 und eine über der unteren Lage 2 angeordnete obere Lage 1 auf, die einen kleineren Flächeninhalt als die untere Lage 2 hat und transparent ist. Hierbei tragen die beiden Lagen 1, 2 des Etiketts ein Sicherheitsmerkmal 5 in Form eines Barcodes.

Wie aus den Figuren 2A und 2B hervorgeht, die jeweils eine seitliche Schnittansicht des ersten Ausführungsbeispiels aus Figur 1 in einer ersten Variante (vgl. Figur 2A) und in einer zweiten Variante (vgl. Figur 2B) zeigen, ist bei der vorliegenden Erfindung die Aufteilung des Sicherheitsmerkmals auf die beiden Lagen 1, 2 des Etiketts von entscheidender Bedeutung.

So sind die Striche des Barcodes gemäß dem Ausführungsbeispiel aus Figur 2A derart auf die beiden Lagen 1, 2 des Etiketts verteilt, daß die Striche abwechselnd auf der oberen Lage 1 (oberer Teil 51 des Sicherheitsmerkmals 5) und auf der unteren Lage 2 (unterer Teil 52 des Sicherheitsmerkmals 5) vorgesehen sind. Das gesamte Sicherheitsmerkmal 5 setzt sich hierbei, wie der Figur 1 entnehmbar ist, nur in Aufsicht auf das mehrlagige Etikett zusammen, wobei hierfür die Transparenz der oberen Lage 1 Voraussetzung ist. Auf diese Weise ist ein Fehlen der oberen Lage 1 oder der unteren Lage 2 beim Abtasten des Barcodes beispielsweise mit einem Laserstrahl oder im Zuge eines anderen optischen Verfahrens sofort bemerkbar.

Auch kann durch die alternative Anordnung der Striche des Barcodes auf der oberen Lage 1 (oberer Teil 51 des Sicherheitsmerkmals 5) und auf der unteren Lage 2 (unterer Teil 52 des Sicherheitsmerkmals 5) unmittelbar festgestellt werden, ob die beiden Lagen 1, 2 des Etiketts in ordnungsgemäßer Form zueinander angeordnet sind. In diesem Falle wäre sowohl die Breite als auch der Abstand der einzelnen Striche des Barcodes zueinander nicht mehr in der vorgesehenen Weise durch das optische Abtastverfahren erkennbar.

Um das mehrlagige Etikett gemäß der Figur 2A an einem beliebigen Gegenstand anbringen zu können, ist die untere Lage 2 auf ihrer Unterseite mit einer Klebstoffschicht 3 versehen. Hierbei handelt es sich um einen konventionellen Haftkleber.

In der seitlichen Schnittansicht der Figur 2B ist das erste Ausführungsbeispiel aus Figur 1 in einer zweiten Variante gemäß der vorliegenden Erfindung zu sehen. Hierbei unterscheidet sich diese zweite Variante von der ersten Variante gemäß der Figur 2A im wesentlichen durch die Aufteilung des Sicherheitsmerkmals 5 auf die beiden Lagen 1, 2:

Während in Figur 2A die einzelnen Striche des Barcodes abwechselnd auf der oberen Lage 1 und auf der unteren Lage 2 des Etiketts vorgesehen sind, ist bei der in Figur 2B gezeigten Variante der in der Zeichnung linke Teil 51 des Barcodes auf der oberen Lage 1 vorgesehen, wohingegen der in der Zeichnung rechte Teil 52 des Barcodes auf der unteren Lage 2 angeordnet ist. Auch in diesem Falle ergibt sich ein vollständiges Sicherheitsmerkmal 5, so wie dies in der Aufsicht der Figur 1 zu erkennen ist, wenn die obere Lage 1 und die untere Lage 2 des mehrlagigen Etiketts in der vorgesehenen Weise zueinander angeordnet sind.

Zur Vermeidung überflüssiger Wiederholungen wird in bezug auf die weiteren Merkmale der Variante aus Figur 2B auf die Erläuterungen zur Variante aus Figur 2A verwiesen.

Figur 3 zeigt eine Aufsicht auf ein zweites Ausführungsbeispiel.

Auch dieses zweite Ausführungsbeispiel weist eine obere Lage 1 und eine untere Lage 2 auf, wobei jeder dieser beiden Lagen 1, 2 jeweils ein Teil 51, 52 des Sicherheitsmerkmals 5 in Form eines Barcodes zugeordnet ist. Da der Flächeninhalt der unteren Lage 2 des Etiketts größer als der Flächeninhalt der oberen Lage 1 des Etiketts ist, erfolgt im zweiten Ausführungsbeispiel die Zusammensetzung des Sicherheitsmerkmals 5 in der Form, daß der in der Zeichnung rechte Teil 51 des Barcodes und der in der Zeichnung linke Teil 52 des Barcodes an der Stelle aufeinanderstoßen, an der der in der Zeichnung linke Rand der oberen Lage 1 endet (vgl. hierzu auch die seitliche Schnittansicht des zweiten Ausführungsbeispiels in Figur 4).

Im Unterschied zu dem in den Figuren 1, 2A und 2B vorgestellten ersten Ausführungsbeispiel ist es mithin nicht erforderlich, daß die obere Lage 1 transparent ist. Vor diesem Hintergrund spielt es auch keine Rolle, ob der Klebstoff, der abschnittsweise zwischen der oberen Lage 1 und der unteren Lage 2 angeordnet ist, transparent oder eingefärbt ist, da sich bei vorliegendem zweiten Ausführungsbeispiel die Zusammensetzung des Sicherheitsmerkmals 5 nicht in Durchsicht, sondern bereits in Aufsicht auf das mehrlagige Etikett ergibt.

Wie vorstehend bereits ausgeführt, ist die Unterseite der oberen Lage 1 des Etiketts i n ihrem in Figur 4 rechten Teil klebstofffrei. Hierdurch wird insofern eine Anfaßlasche definiert, als ein durch den gekrümmten Pfeil angedeutetes problemloses Abheben bzw. Abziehen der oberen Lage 1 von der unteren Lage 2 ermöglicht ist. Hierdurch wird die Flexibilität und vielseitige Verwendbarkeit des mehrlagigen Etiketts gemäß dem zweiten Ausführungsbeispiel in erfreulicher Weise begünstigt.

Des weiteren ist aus Figur 4 ersichtlich, daß auf der Unterseite der unteren Lage 2 eine Klebstoffschicht 3 vorgesehen ist, durch die ein Anbringen des mehrlagigen Etiketts gemäß der vorliegenden Erfindung an einem Gegenstand ermöglicht wird. Diese Klebstoffschicht 3 ist mit einem klebstoffabweisenden Trägermaterial 4 auf der Unterseite des mehrlagigen Etiketts bedeckt, wobei die einzelnen Etiketten in einer Reihe auf diesem Trägermaterial 4 angeordnet sind und beim maschinellen Verspenden in vollautomatischer Weise an dem jeweiligen Gegenstand angebracht werden können.

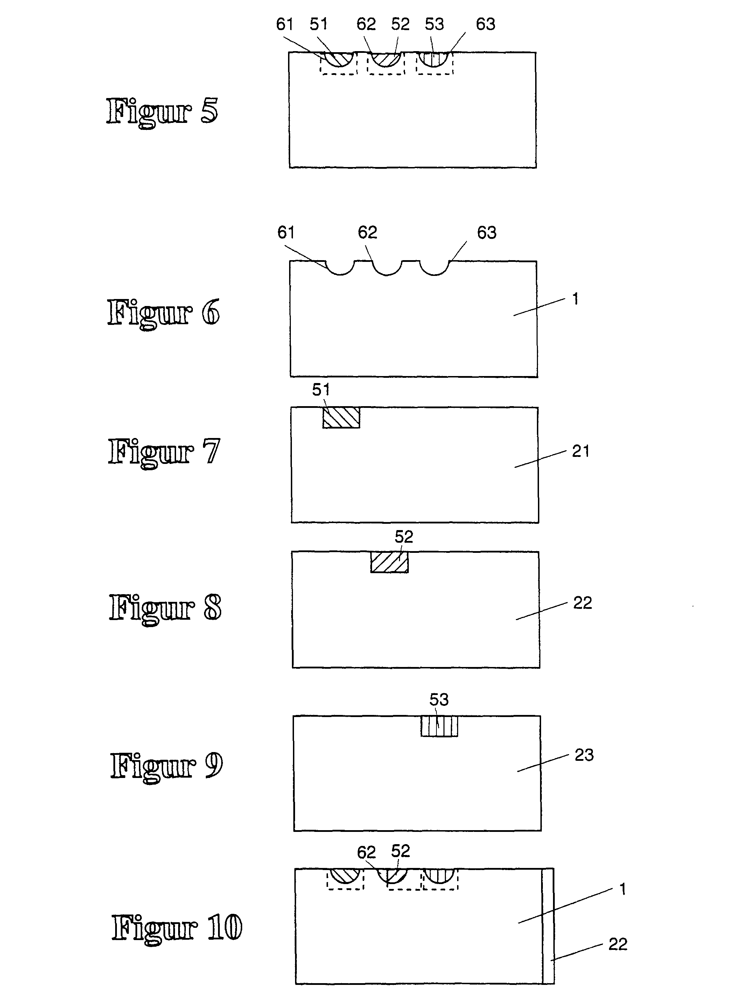

Figur 5 zeigt ein weiteres Ausführungsbeispiel der Erfindung. Das Etikett weist eine obere Lage 1 auf, die opak ist und drei Aussparungen 61, 62 und 63 aufweist. Die Aussparungen sind im Beispiel durch halbkreisförmige Ausstanzungen am Rand der oberen Lage 1 realisiert.

Das in Figur 5 gezeigte Etikett besteht aus insgesamt vier Lagen, die einzeln in den Figuren 6 bis 9 dargestellt sind.

Figur 6 zeigt die oberste Lage 1 mit den Aussparungen 61, 62 und 63.

Figur 7 zeigt die unter der obersten Lage angeordnete Lage 21, die transparent ist und eine Markierung 51 aufweist, die beispielsweise durch eine farbige Fläche realisiert sein kann. In der Figur ist die Farbe durch eine Schraffierung symbolisiert. Die Lage der Markierung 51 ist so gewählt, daß bei zusammengesetztem Etikett die Markierung 51 unterhalb der Aussparung 61 in der oberen Lage 1 liegt. Die Fläche der Markierung 51 ist jedoch größer als die Fläche der Aussparung 61, so daß die Aussparung 61 als Maske wirkt, durch die ein Teil der Markierung 51 sichtbar ist.

Die in den Figuren 8 und 9 dargestellten weiteren Lagen 22 und 23 sind wie die Lage 21 der Figur 7 ausgebildet, mit der Maßgabe, daß die Markierung 52 der Lage 22 unterhalb der Aussparung 62 und die Markierung 53 der Lage 23 unterhalb der Aussparung 63 liegt.

Bei dem in Figur 5 gezeigten zusammengesetzten Etikett sind in den Aussparungen 61, 62 und 63 die Markierungen 51, 52 und 53 sichtbar, da zumindest die Lagen 22 und 23 (Figuren 7 und 8) transparent sind.

Bei der Endkontrolle des Etiketts wird der Aufdruck auf der oberen Lage mit einer automatischen Kamera überprüft. Dabei wird gleichzeitig überprüft, ob die unteren Lagen 51, 52 und 53 vorhanden sind, was daran zu erkennen ist, daß sich das in Figur 5 gezeigte Bild der Kamera darbietet. Wenn eine der unteren Lagen fehlen würde, würde die entsprechende Markierung 51, 52 oder 53 in einer der Aussparungen 6 1 bis 63 fehlen, was von der automatischen Kamera sofort erfaßt würde und zur Alarmerzeugung ausgenutzt werden könnte.

Bei der Massenproduktion derartiger mehrlagiger Etiketten läßt es sich nicht völlig vermeiden, daß die einzelnen Lagen gegeneinander geringfügig gegenüber ihrer gewünschten Lage verschoben sind. Falls sich die Abweichung von der gewünschten Lage innerhalb der vorgegebenen Toleranz hält, ergibt sich unverändert das in Figur 5 gezeigte Bild, so daß die automatische Kamera das Etikett für gut befindet und keinen Alarm auslöst. Wenn die Abweichung jedoch so stark ist, daß eine Markierung, beispielsweise die Markierung 51, die zu ihr gehörende Aussparung, im Beispiel die Aussparung 61, nicht oder nicht mehr ganz ausfüllt, wird dies von der automatischen Kamera erkannt, worauf dann ein Alarm ausgelöst werden kann.

Figur 10 zeigt ein Etikett, bei dem die Lage 22 über die Toleranzgrenze hinaus nach rechts verschoben ist, was daran zu erkennen ist, daß die Aussparung 62 in der oberen Lage 1 nicht vollständig durch die Markierung 52 ausgefüllt ist.

## Patentansprüche

1. Verfahren zum Herstellen eines mehrlagigen Etiketts, das mindestens ein Sicherheitsmerkmal aufweist, **gekennzeichnet durch** folgende Verfahrensschritte:
a) Bereitstellen mindestens einer unteren Lage (2),
b) Anordnen eines Teils (52) des Sicherheitsmerkmales (5) an der mindestens einen unteren Lage (2),
c) Bereitstellen mindestens einer oberen Lage (1),
d) Anordnen eines Teils (51; 61) des Sicherheitsmerkmals an der mindestens einen oberen Lage (1),
e) Zusammensetzen der mindestens einen oberen Lage (1) und der mindestens einen unteren Lage (2) derart, dass die Teile (52, 51; 61, 51, 52, 53) des Sicherheitsmerkmals sich zu dem Sicherheitsmerkmal (5) zusammensetzen, wobei die obere Lage (1) die untere Lage (2) nicht vollständig bedeckt oder mindestens für eine der beiden Lagen ein transparentes Material gewählt wird.

2. Verfahren nach Anspruch 1, **dadurch gekennzeichnet, dass** es sich bei dem Sicherheitsmerkmal (5) µm einen Barcode handelt.

3. Verfahren nach Anspruch 1, **dadurch gekennzeichnet, dass** es sich bei dem Sicherheitsmerkmal (5) um einen Matrixcode handelt.

4. Verfahren gemäß Anspruch 2, **dadurch gekennzeichnet, dass** der Barcode m Striche aufweist, von denen n Striche auf einer Lage (1) des Etiketts und m-n Striche auf einer anderen Lage (2) des Etiketts angeordnet sind, wobei m>n>0.

5. Verfahren gemäß einem der vorherigen Ansprüche, **dadurch gekennzeichnet, dass** für die obere Lage (1) ein transparentes Material gewählt wird.

6. Verfahren gemäß mindestens einem der Ansprüche 1 bis 3, **dadurch gekennzeichnet, dass** mindestens eine der Lagen (1, 2) auf ihrer Oberseite und/oder auf ihrer Unterseite zumindest abschnittsweise und/oder zumindest stellenweise mit Klebstoff versehen wird.

7. Verfahren gemäß Anspruch 6, **dadurch gekennzeichnet, dass** die untere Lage (2) auf ihrer Unterseite zumindest abschnittsweise und/oder zumindest stellenweise mit Klebstoff (3) versehen wird.

8. Verfahren gemäß Anspruch 7, **dadurch gekennzeichnet, dass** der Klebstoff mit einem klebstoffabweisenden Trägermaterial (4) bedeckt ist.

9. Verfahren gemäß mindestens einem der Ansprüche 1 bis 8, **dadurch gekennzeichnet, dass** mindestens zwei Lagen (1, 2) durch Klebstoff miteinander verbunden werden.

10. Verfahren gemäß mindestens einem der Ansprüche 1 bis 9, **dadurch gekennzeichnet, dass** das Sicherheitsmerkmal (5) aufgedruckt wird.

11. Verfahren gemäß mindestens einem der Ansprüche 1 bis 9, **dadurch gekennzeichnet, dass** das Sicherheitsmerkmal (5) aufgeprägt wird.

12. Verfahren gemäß mindestens einem der Ansprüche 1 bis 9, **dadurch gekennzeichnet, dass** das Sicherheitsmerkmal (5) aufgestanzt wird.

13. Verfahren gemäß mindestens einem der Ansprüche 1 bis 12, **dadurch gekennzeichnet, dass** mindestens eine der Lagen (1, 2) aus Kunststoff besteht.

14. Verfahren gemäß Anspruch 13, **dadurch gekennzeichnet, dass** es sich bei dem Kunststoff um mindestens eines der nachfolgend genannten Materialien handelt: Acrylat,Polyester, Polyethylen, (PE), Polyethylenterephthalat (PET), Polypropylen (PP),Polyvinylchlorid (PVC).

15. Verfahren gemäß mindestens einem der Ansprüche 1 bis 14, **dadurch gekennzeichnet, dass** mindestens ein Aufdruck bzw. mindestens eine Beschriftung vorgesehen wird.

16. Verfahren gemäß mindestens einem der Ansprüche 1 bis 15, **dadurch gekennzeichnet, dass** mindestens eine Prägung vorgesehen wird.

17. Verfahren gemäß mindestens einem der Ansprüche 1 bis 16, **dadurch gekennzeichnet, dass** mindestens eine Stanzung vorgesehen wird.

18. Verfahren gemäß Anspruch 17, **dadurch gekennzeichnet, dass** es sich bei der Stanzung um eine Sicherheitsstanzung handelt, durch die das Etikett segmentiert wird.

19. Verfahren gemäß einem der Ansprüche 1 -4, **dadurch gekennzeichnet, dass** für die obere Lage (1) ein opakes Material gewählt wird, und mindestens eine Aussparung (61,62, 63) vorgesehen wird, durch die mindestens eine untere Lage (21, 22, 23) sichtbar ist.

20. Verfahren gemäß Anspruch 19, **dadurch gekennzeichnet, dass** die mindestens eine untere Lage (21, 22, 23) mit einer Markierung (51, 52, 53) versehen wird, die sich unter der mindestens einen Aussparung (61, 62, 63) befindet und die eine Flächenausdehnung aufweist, die größer als die Fläche der mindestens einen Aussparung (61, 62, 63) ist.

21. Verfahren gemäß Anspruch 19 oder 20, **dadurch gekennzeichnet, dass** für die mindestens eine untere Lage (21, 22, 23) transparentes Material gewählt wird.

22. Verfahren gemäß einem der Ansprüche 19 bis 21, **dadurch gekennzeichnet, dass** die mindestens eine untere Lage (21, 22, 23) mit mindestens einer Aussparung versehen wird.

23. Etikett, **dadurch gekennzeichnet, dass** es nach einem der vorhergehenden Ansprüche hergestellt ist.

## Claims

1. Method of manufacturing a multi-layer label, which has at least one security feature, **characterized by** the following method steps:
a) providing at least one bottom layer (2),
b) arranging one part (52) of the security feature (5) on the at least one bottom layer (2),
c) providing at least one top layer (1),
d) arranging one part (51; 61) of the security feature on the at least one top layer (1),
e) putting together the at least one top layer (1) and the at least one bottom layer (2) in such a way that the parts (52, 51; 61, 51, 52, 53) of the security feature combine to form the security feature (5), wherein the top layer (1) does not fully cover the bottom layer (2) or a transparent material is selected for at least one of the two layers.

2. Method according to claim 1, **characterized in that** the security feature (5) is a bar code.

3. Method according to claim 1, **characterized in that** the security feature (5) is a matrix code.

4. Method according to claim 2, **characterized in that** the bar code comprises m bars, of which n bars are disposed on one layer (1) of the label and m-n bars are disposed on another layer (2) of the label, wherein m>n>0.

5. Method according to one of the preceding claims, **characterized in that** a transparent material is selected for the top layer (1).

6. Method according to at least one of claims 1 to 3, **characterized in that** at least one of the layers (1, 2) is provided at its top side and/or at its underside at least in sections and/or at least in places with adhesive.

7. Method according to claim 6, **characterized in that** the bottom layer (2) is provided at its underside at least in sections and/or at least in places with adhesive (3).

8. Method according to claim 7, **characterized in that** the adhesive is covered by an adhesive-repellent base material (4).

9. Method according to at least one of claims 1 to 8, **characterized in that** at least two layers (1, 2) are joined together by adhesive.

10. Method according to at least one of claims 1 to 9, **characterized in that** the security feature (5) is imprinted.

11. Method according to at least one of claims 1 to 9, **characterized in that** the security feature (5) is embossed.

12. Method according to at least one of claims 1 to 9, **characterized in that** the security feature (5) is stamped on.

13. Method according to at least one of claims 1 to 12, **characterized in that** at least one of the layers (1, 2) is made of plastics material.

14. Method according to claim 13, **characterized in that** the plastics material is at least one of the following materials: acrylate, polyester, polyethylene, (PE), polyethylene terephthalate (PET), polypropylene (PP), polyvinyl chloride (PVC).

15. Method according to at least one of claims 1 to 14, **characterized in that** at least one imprint and/or at least one inscription is provided.

16. Method according to at least one of claims 1 to 15, **characterized in that** at least one embossing is provided.

17. Method according to at least one of claims 1 to 16, **characterized in that** at least one stamping is provided.

18. Method according to claim 17, **characterized in that** the stamping is a security stamping, by means of which the label is segmented.

19. Method according to one of claims 1 -4, **characterized in that** an opaque material is selected for the top layer (1), and at least one cutout (61, 62, 63) is provided, through which the at least one bottom layer (21, 22, 23) is visible.

20. Method according to claim 19, **characterized in that** the at least one bottom layer (21, 22, 23) is provided with a marking (51, 52, 53), which is situated under the at least one cutout (61, 62, 63) and which has a superficial extent, which is greater than the surface area of the at least one cutout (61, 62, 63).

21. Method according to claim 19 or 20, **characterized in that** transparent material is selected for the at least one bottom layer (21, 22, 23).

22. Method according to one of claims 19 to 21, **characterized in that** the at least one bottom layer (21, 22, 23) is provided with at least one cutout.

23. Label, **characterized in that** it is manufactured according to one of the preceding claims.

## Revendications

1. Procédé pour la production d'une étiquette multicouche qui comprend au moins un signe distinctif de sécurité, **caractérisé par** les étapes de procédé suivantes :
a) préparer au moins une couche inférieure (2),
b) disposer une partie (52) du signe distinctif de sécurité (5) sur au moins une couche inférieure (2),
c) préparer au moins une couche supérieure (1),
d) disposer une partie (51 ; 61) du signe distinctif de sécurité sur au moins une couche supérieure (1),
e) assembler ladite couche supérieure (1) et ladite couche inférieure (2) de telle manière que les parties (52, 51 ; 61, 51, 52, 53) du signe distinctif de sécurité se réunissent pour former le signe distinctif de sécurité (5), la couche supérieure (1) ne recouvrant pas totalement la couche inférieure (2) ou une matière transparente étant choisie au moins pour une des deux couches.

2. Procédé selon la revendication 1, **caractérisé en ce que** le signe distinctif de sécurité (5) est un code à barres.

3. Procédé selon la revendication 1, **caractérisé en ce que** le signe distinctif de sécurité (5) est un code matriciel.

4. Procédé selon la revendication 2, **caractérisé en ce que** le code à barres présente m traits, dont n traits sont disposés sur une couche (1) de l'étiquette et m-n traits sur l'autre couche (2) de l'étiquette, où m>n>0.

5. Procédé selon une des revendications précédentes, **caractérisé en ce qu'**on choisit une matière transparente pour la couche supérieure (1).

6. Procédé selon au moins une des revendications 1 à 3, **caractérisé en ce qu'**au moins une des couches (1, 2) est munie de colle sur son côté supérieur et/ou sur son côté inférieur, au moins par segments et/ou au moins par endroits.

7. Procédé selon la revendication 6, **caractérisé en ce que** la couche inférieure (2) est munie de colle (3) sur son côté inférieur, au moins par segments et/ou au moins par endroits.

8. Procédé selon la revendication 7, **caractérisé en ce que** la colle est recouverte d'une matière support (4) qui repousse la colle.

9. Procédé selon au moins une des revendications 1 à 8, **caractérisé en ce qu'**au moins deux couches (1, 2) sont réunies entre elles par de la colle.

10. Procédé selon au moins une des revendications 1 à 9, **caractérisé en ce que** le signe distinctif de sécurité (5) est imprimé.

11. Procédé selon au moins une des revendications 1 à 9, **caractérisé en ce que** le signe distinctif de sécurité (5) est estampé.

12. Procédé selon au moins une des revendications 1 à 9, **caractérisé en ce que** le signe distinctif de sécurité (5) est découpé.

13. Procédé selon au moins une des revendications 1 à 12, **caractérisé en ce qu'**au moins une des couches (1, 2) est composée de matière plastique.

14. Procédé selon la revendication 13, **caractérisé en ce que** 1a matière plastique est constituée par au moins une des matières citées ci-après : acrylate, polyester, polyéthylène, (PE), polytéréphtalate d'éthylène (PET), polychlorure de vinyle (PVC).

15. Procédé selon au moins une des revendications 1 à 14, **caractérisé en ce qu'**il est prévu au moins une impression ou au moins une inscription.

16. Procédé selon au moins une des revendications 1 à 15, **caractérisé en ce qu'**il est prévu au moins un estampage.

17. Procédé selon au moins une des revendications 1 à 16, **caractérisé en ce qu'**il est prévu au moins un découpage.

18. Procédé selon la revendication 17, **caractérisé en ce que** le découpage est constitué par un découpage de sécurité sous l'effet duquel l'étiquette est segmentée.

19. Procédé selon au moins une des revendications 1 à 4, **caractérisé en ce qu'**on choisit une matière opaque pour la couche supérieure (1) et il est prévu au moins une échancrure (61, 62, 63) à travers laquelle au moins une couche inférieure (21, 22, 23) est visible.

20. Procédé selon la revendication 19, **caractérisé en ce qu'**au moins une couche inférieure (21, 22, 23) est munie d'un marquage (51, *52,* 53) qui se trouve sous au moins une échancrure (61, 62, 63) et qui présente au moins une dimension de surface qui est plus grande que la surface de ladite échancrure (61, 62, 63).

21. Procédé selon la revendication 19 ou 20, **caractérisé en ce qu'**on choisit une matière transparente pour au moins une couche inférieure (21, 22, 23).

22. Procédé selon une des revendications 19 à 21, **caractérisé en ce qu'**au moins une couche inférieure (21, 22, 23) est munie d'au moins une échancrure.

23. Etiquette, **caractérisée en ce qu'**elle est fabriquée conformément à une des revendications précédentes.
